# EUROPÄISCHE PATENTANMELDUNG

(11) **EP 1 482 454 A1**
(43) Veröffentlichungstag der Anmeldung: **01.12.2004**
(21) Anmeldenummer: 03028320.4
(22) Anmeldetag: 09.12.2003
(51) Int. Cl.: G07C 1/30

(54) **Parkplatzautomat**

(30) Priorität: 26.05.2003 PL 36033403
(71) Anmelder: Krygler, Agenor, 03-902 Warschau (PL); Krygler, Alicja, 03-902 Warschau (PL)
(72) Erfinder: Krygler, Agenor, 03-902 Warschau (PL); Krygler, Alicja, 03-902 Warschau (PL)
(74) Vertreter: Richter, Werdermann, Gerbaulet & Hofmann

(57) **Zusammenfassung**

Um einen Parkplatzautomaten (100) mit einer Eingabevorrichtung für Zahlungsmittel und einer Anzeigevorrichtung zur Anzeige einer bezahlten Parkzeit sowie einer zentralen Steuereinrichtung (6) zu schaffen, der eine genaue Abrechnung der tatsächlich beanspruchten Parkzeit ermöglicht, wird vorgeschlagen, dass eine Rückgabevorrichtung zur Rückzahlung eines der nicht verbrauchten Parkzeit entsprechenden Geldbetrags vorgesehen ist. Des Weiteren wird ein entsprechendes Verfahren angegeben.

## Beschreibung

Diese Erfindung betrifft einen Parkplatzautomat mit einer Eingabevorrichtung für Zahlungsmittel und einer Anzeigevorrichtung zur Anzeige einer bezahlten Parkzeit und mit einer zentralen Steuereinrichtung sowie ein Verfahren zur Bewirtschaftung eines Parkplatzes, das mit dem Parkplatzautomaten ausführbar ist.

Aus der Praxis ist es bekannt, dass Parkplätze mit Parkplatzautomaten unterschiedlichster Ausführung bewirtschaftet werden, um durch das Vermieten von Stellflächen für Kraftfahrzeuge einen wirtschaftlichen Gewinn zu erzielen. Dabei sind Parkplatzautomaten in Form sogenannter Parkuhren bekannt. In diese Parkuhren wird eine Geldmünze eingeworfen, um derart die Stellfläche für eine bestimmte Parkzeit zu mieten. Dies ist aufwändig, da für jeden Parkplatz eine eigene Parkuhr bereitgestellt werden muss.

Aus der EP 1 326 218 A2 ist ein zentraler Parkplatzautomat zur Bewirtschaftung mehrerer Parkplätze bekannt, wobei jedem Parkplatz ein Anzeigemittel am Parkplatzautomaten zugeordnet ist, um derart einer Aufsichtsperson eine zentrale Überwachung der noch vorhandenen Restparkzeiten bzw. bereits abgelaufener Parkzeiten zu ermöglichen, ohne dass das Überwachungspersonal jeden Parkplatz einzeln kontrollieren muss.

Weitere gattungsgemäße Parkplatzautomaten sind u. a. aus der US 4,876,540, der DE 42 072 36, der DE 38 402 58, der DE 40 137 19, der DE 40 396 und der DE 41 140 35 bekannt.

Als nachteilig bei den bekannten Parkplatzautomaten hat sich erwiesen, dass bei den Parkplatzautomaten, bei denen die Bezahlung im Voraus erfolgt, oftmals der Parkvorgang vor Erreichen der bereits bezahlten Höchstparkzeit beendet wird, so dass dem Nutzer des Parkplatzes ein finanzieller Nachteil entsteht.

In Anbetracht der obigen Ausführungen liegt der Erfindung die allgemeine Aufgabe zugrunde, einen Parkplatzautomaten zu schaffen, der einerseits eine genaue Abrechnung der tatsächlich benötigten Parkzeit ermöglicht und der andererseits in einfacher Weise realisierbar ist. Des Weiteren soll ein entsprechendes System zur Bewirtschaftung eines Parkplatzes angegeben werden.

Diese Aufgaben werden durch die in den Ansprüchen 1 und 6 angegebenen Merkmale gelöst.

Als Kerngedanke der vorliegenden Erfindung weist der Parkplatzautomat eine Rückgabevorrichtung auf. Dabei wird von der zentralen Steuereinrichtung diejenige Restzeit ermittelt, die bis zur Erreichung der bereits im Voraus bezahlten höchstmöglichen Parkzeit noch zur Verfügung steht. Anhand dieser Zeit wird mit den für diesen Parkplatz festgelegten Parkgebühren ein Geldbetrag ermittelt, der dieser noch verbleibenden Zeit entspricht. Die Rückgabevorrichtung zahlt diesen Geldbetrag an den Nutzer des Parkplatzautomaten, der mit seinem Kraftfahrzeug vorzeitig den Parkplatz wieder verlässt, zurück, so dass nur die tatsächlich geparkte Zeit abgerechnet wird. Zusätzlich ist eine optische Anzeigevorrichtung vorgesehen mit der dem Nutzer ein der nicht mehr benötigten aber bereits bezahlten Parkzeit entsprechender Geldbetrag angezeigt wird, der vom Parkautomat zurückerstattet wird. Dieser geldbetrag kann von der Steuereinrichtung anhand der hinterlegten Gebührentabelle errechnet werden. Somit ist der Nutzer über die Höhe des eingesparten Geldbetrags informiert. Zusätzlich kann auch eine akustische Wiedergabe des zurückzuerstattenden Geldbetrags erfolgen.

Es versteht sich, dass eine entsprechende Gebührentabelle, in der die Parkgebühren für unterschiedlich lange Zeiträume festgelegt sind, in einer entsprechenden Speichereinheit der zentralen Steuereinrichtung des Parkplatzautomaten hinterlegt ist. Dabei können diese Gebühren auch vom Betreiber des Parkplatzautomaten in gewünschter Weise verändert werden. Die Ermittlung der noch verbleibenden Parkzeit, die nicht genutzt wird, kann vom Fachmann hard- und/oder softwaremäßig in der zentralen Steuereinheit implementiert werden, wobei das in der zentralen Steuereinheit sowieso vorhandene Taktsignal einer Uhr, die den Zeitablauf überwacht, zugrunde gelegt wird. Aus der so ermittelten Restparkzeit und der in der Gebührentabelle hinterlegten Werte kann von einer Berechnungseinheit die zu erstattende Parkgebühr berechnet werden.

Der Vorteil der Erfindung besteht darin, dass nur die tatsächlich beanspruchte Parkzeit vom Nutzer bezahlt wird, da er den zuviel bezahlten Geldbetrag zurückerstattet bekommt. Außerdem ist derart die Bewirtschaftung des Parkplatzes mit nur einem einzigen vorzugsweise an einer zentralen Stelle des Parkplatzes aufgestellten Parkplatzautomat möglich. Ein weiterer Automat, der z. B. eine Magnetkarte am Ausgang des Parkplatzes einliest, ist nicht notwendig.

Es ist für den Fachmann ersichtlich, dass an dem Parkplatzautomaten Anzeigemittel vorgesehen sein können, die für jeden der zu bewirtschaftenden Parkplätze separat die noch verbleibende Restparkzeit bzw. ein Überschreiten dieser Parkzeit anzeigen, so dass der Parkplatz von nur einer Überwachungsperson überwacht werden kann. Die Bezahlung der Parkgebühr im Voraus kann auf beliebige Weise erfolgen, z. B. durch das Einwerfen von Münzen in den Parkplatzautomaten. Die Rückerstattung der nicht benötigten Parkgebühr kann ebenso auf vielfältige Weise erfolgen. Über eine geeignete Eingabevorrichtung beispielsweise eine Tastatur kann auch eine im Voraus zu bezahlende Parkzeit vom Nutzer eingegeben werden. Es kann unter anderem der entsprechende Betrag in Bar ausbezahlt werden oder es wird eine Urkunde über eine Gutschrift des entsprechenden Betrags z. B. mit einer Druckereinrichtung erstellt, wobei diese Gutschrift vom Nutzer des Parkplatzautomaten eingelöst werden kann. Bevorzugt erfolgt die Bezahlung bzw. die Gutschrift wie im folgenden beschrieben.

Der Kerngedanke der Erfindung besteht in einem elektronischen System zur Erhebung der Gebühren für das Parken von Kraftfahrzeugen mit einer zentralen Steuereinrichtung. Die zentrale Steuereinrichtung verfügt über einen ersten Signaleingang für die Schnittstelle der Zahlkarte, einen zweiten Eingang für ein Eingabesystem, insbesondere eine Tastatur, einen dritten Eingang für das Signal eines Zeitgenerators und einen vierten Eingang für das Signal aus einem Versorgungssystem. Ein erster Ausgang ist an eine Schnittstelle der Zahlkarte angeschlossen. Ein zweiter Ausgang ist an eine visuelle Anzeige und ein System zur Übermittlung von Sprachnachrichten angeschlossen. Ein dritter Ausgang ist an ein System zur Tonübertragung angeschlossen. Die Zahlkarte hat einen Eingang für das Signal der Schnittstelle der Zahlkarte und einen Ausgang an der Schnittstelle der Zahlkarte. Das Verfahren zur Erhebung von Parkgebühren für Kraftfahrzeuge mit dem elektronischen System des Parkautomaten besteht aus zwei Phasen der Zahlung. Die erste Phase beginnt mit der Übertragung eines Signals aus der Zahlkarte über die Schnittstelle der Zahlkarte an die Steuerungseinheit, das nach einer Eingabe beispielsweise über die Tastatur übertragen wird. Nach der Verifizierung und dem Feststellen durch die Steuerungseinheit, dass auf der Zahlkarte noch Geld vorhanden ist, folgt die Überweisung einer pauschalen Gebühr für das Parken von der Zahlkarte über die Schnittstelle der Zahlkarte an die Steuerungseinheit. Die Steuerungseinheit richtet in einem zugeordneten Speicher ein Konto ein, auf dem die Identifizierungsnummer der Zahlkarte und der Wert der bezahlten Gebühr gespeichert werden und sendet entsprechende Signale an die visuelle Anzeige, die Sprach- und Tonausgabe, um dem Nutzer eine entsprechende Mitteilung zu machen beispielsweise über die bezahlte Gebühr und/oder über ein Restguthaben auf der Zahlkarte. Das Konto wird entsprechend dem Taktsignal des Zeitgenerators und einer festlegbaren Gebührentabelle im zeitlichen Verlauf entsprechend reduziert. Die zweite Phase besteht in der Rückgabe einer nicht ausgenutzten Gebühr. Sie beginnt mit der Übertragung eines Signals aus einer wiederum in den Parkautomaten eingeführten Zahlkarte über die Schnittstelle der Zahlkarte zur Steuerungseinheit. Wenn der Identifizierungscode der Zahlkarte mit dem Code eines in der Steuerungseinheit angelegten Kontos übereinstimmt und wenn auf diesem Konto noch ein Restbetrag vorhanden ist wird ein entsprechendes Signal von der Steuerungseinheit über die Schnittstelle an die Zahlkarte übermittelt. Entsprechend wird über die Schnittstelle eine Rückübertragung der nicht ausgenutzten Gebühr an die Zahlkarte vorgenommen. Des Weiteren ist vorgesehen, dass auf der Anzeige der Kontostand auf der Zahlkarte angezeigt wird, wobei die Höhe der zurückzuerstattenden Gebühr ebenfalls auf der Anzeige angezeigt wird. Es kann auch das auf der Karte nunmehr wieder erhöhte Guthaben angezeigt werden. Der Parkautomat bedarf keiner technischen Wartung, da er mit einer entsprechend ausgelegten Batterie vom Stromnetz unabhängig betrieben werden kann.

Vorteilhafte Ausgestaltungen der Erfindung sind in den Unteransprüchen gekennzeichnet.

Mit der im Anspruch 2 und im Anspruch 7 angegebenen Ausgestaltung ist ein bargeldloser Zahlungsverkehr ermöglicht. Die entsprechenden Schreib-/Leseeinheiten für Chipkarten bzw. das Abbuchen/Gutschreiben von Geldbeträgen auf diese Chipkarten sind im Stand der Technik bekannt und die Ausstattung eines Parkplatzautomaten mit einer derartigen Schreib-/Leseeinheit ist dem Fachmann möglich. Unter dem Begriff Chip-Karte sind sämtliche dem Fachmann bekannten Mittel für bargeldlosen Zahlungsverkehr zu verstehen. Dabei führt der Nutzer seine Chipkarte in das Schreib-/Lesegerät ein und ein Geldbetrag, der der vom Nutzer gewünschten Parkdauer entspricht, wird von der Chipkarte abgebucht und in einer Speichereinheit der zentralen Steuereinrichtung verbucht. Beendet der Nutzer vorzeitig den Parkvorgang, wird die Chipkarte erneut in die Schreib-/Leseeinheit eingegeben und ein Geldbetrag, der der verbleibenden und nicht benötigten Parkdauer entspricht, wird auf die Chipkarte zurückgebucht und über eine optische Anzeige dem Nutzer mitgeteilt. Die Chipkarte kann eine übliche EC-Karte sein oder eine Geldkarte , die vom Nutzer mit von ihm gewünschten Geldbeträgen aufgeladen wird. Dies bietet den Vorteil, dass an dem Parkplatzautomaten kein Geldspeicher für Münzen oder Banknoten vorhanden ist, so dass keine Gefahr besteht, dass der Parkplatzautomat aufgebrochen wird.

Mit der im Anspruch 3 und im Anspruch 8 angegebenen Maßnahme ist erreicht, dass jedem Nutzer die ihm tatsächlich zustehenden Gebühren rückerstattet werden und ein Missbrauch vermieden ist. Dabei kann die Codierung der Chipkarte bzw. eines in einer Speichereinheit der Steuereinrichtung geführten Guthabenkontos entweder über einen PIN-Code erfolgen, der vom Nutzer eingegeben wird oder dadurch, dass die zentrale Steuereinrichtung die Identifikationsnummer, die für jede Chipkarte einmalig ist, aus dieser ausliest und derart bei einer vorzeitigen Beendigung des Parkvorgangs, wenn also eine Chipkarte wieder in die Schreib/Leseeinheit eingeführt wird, von dieser ihre Identifikationsnummer wiederum feststellt. Anhand dieser Identifikationsnummer wird das Guthabenkonto in der Steuereinrichtung daraufhin überprüft, ob dort noch ein nicht verbrauchter Geldbetrag übrig ist. Es ist auch möglich, dass die Codierung durch die Angabe oder Auswahl eines Parkplatzes durch den Nutzer erfolgt, für den eine Parkgebühr entrichtet bzw. erstattet werden soll.

Nach den Ansprüchen 4 und 9 kann der Nutzer des Parkplatzautomaten über eine Auswahlvorrichtung am Parkplatzautomaten eine Parkzeit, die er im Voraus bezahlen möchte, auswählen. Ebenso ist es möglich, dass er den Parkplatz, auf dem er sein Kraftfahrzeug abgestellt hat, an dem Parkplatzautomaten anwählt. Hierzu kann eine an sich beliebig gestaltete Auswahlvorrichtung am Parkplatzautomat vorgesehen sein. In bevorzugter Weise ist dies eine Tastatur, über die er eine Parkzeit oder einen Parkplatz auswählt. Es können auch mehrere in einem Bedienfeld angeordnete Taster oder Druckknöpfe am Parkplatzautomaten vorgesehen sein, um die gewünschten Parkzeiten oder den Parkplatz auszuwählen. Dies kann auch in Verbindung mit einer optischen Anzeigevorrichtung durch eine interaktive Menüsteuerung realisiert sein.

Ein batteriebetriebener Parkplatzautomat, wie er in den Ansprüchen 5 und 10 gekennzeichnet ist, bietet den Vorteil, dass er vom öffentlichen Stromnetz unabhängig betreibbar ist, so dass der Parkplatzautomat auch zur Bewirtschaftung eines Parkplatzes verwendet werden kann, der z. B. außerhalb eines Siedlungsgebiets liegt. Es ist dem Fachmann möglich, den Stromverbrauch des Parkplatzautomaten so weit zu senken bzw. eine Batterie ausreichender Kapazität vorzusehen, so dass ein Austausch bzw. eine Wiederaufladung der Batterie nur alle drei Jahre erforderlich ist. Zusammen mit dem bargeldlosen Zahlungsverkehr wird somit ein wartungsarmer Parkplatzautomat erhalten, der keiner weiteren Überwachung oder Wartung bedarf.

Ein Ausführungsbeispiel der Erfindung wird nachstehend anhand der Zeichnung näher erläutert. Es zeigt:
- Fig. 1: in einer schaubildlichen Ansicht einen Parkplatzautomaten mit einem Blockschaltbild und einer Frontplatte,
- Fig. 2: die Frontplatte gemäß Fig. 1 und

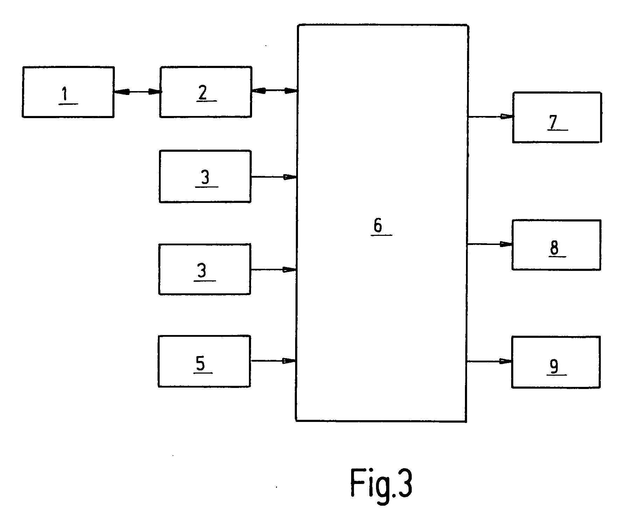

- Fig. 3: das Blockschaltbild gemäß Fig. 1.

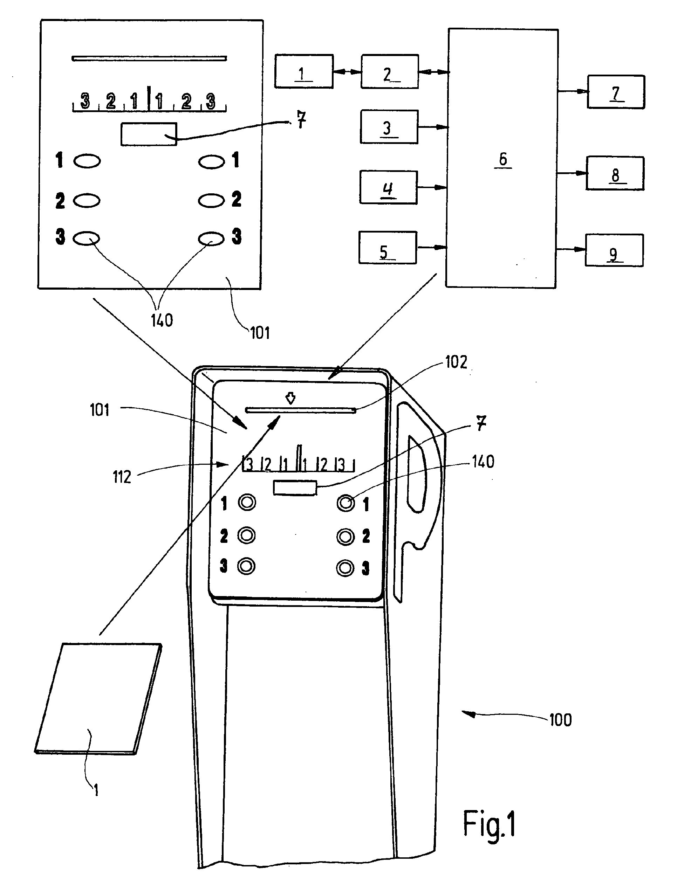

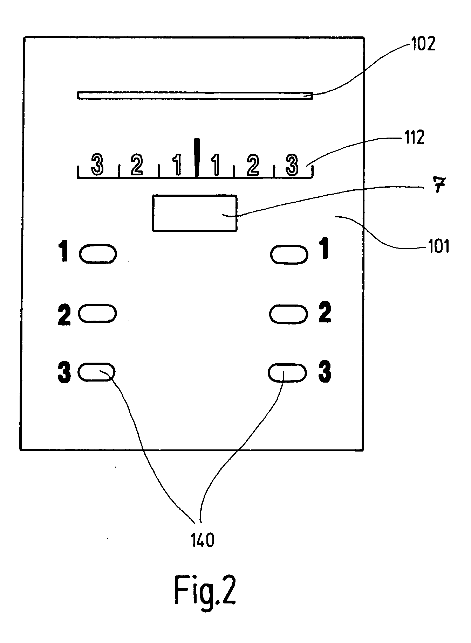

In Fig. 1 ist ausschnittsweise ein Parkplatzautomat 100 nach der Erfindung wiedergegeben, wie er für den Einsatz in der Praxis vorgesehen ist. Die Ein- und Ausgabesystems und die Elektronik und eine zentrale Steuereinrichtung 6 des beispielsweise säulenförmig ausgebildeten Parkplatzautomaten 100 sind am oberen Ende einer Standsäule angeordnet. Sie umfassen (siehe auch Fig. 2) eine Frontplatte 101 mit einem Einschubschlitz 102 für eine Chipkarte 1, einen Grundrissplan 112 der Parkplätze sowie Betätigungsmittel 140 z. B. in Form von Tasten aus einem glasklaren Material mit integrierten Leuchtdioden, die den einzelnen Parkplätzen zugeordnet sind. Die Betätigungsmittel 140 können mechanisch wirkende Mikroschalter umfassen, die zusammen mit den integrierten Leuchtdioden auf einer hinter der Frontplatte 101 montierten Schaltungsplatte direkt montiert sind. Anstelle mechanischer Mittel können auch Sensoren eingesetzt werden. Mit den integrierten Leuchtdioden pro Parkplatz können alle zeitlichen Abschnitte eines Parkvorgangs angezeigt werden.

Aus der Darstellung in Figur 1 ist der grundsätzliche Aufbau der verschiedenen Komponenten des Parkplatzautomaten 100 ersichtlich. Der Parkplatzautomat 100 verfügt über eine zentrale Steuereinrichtung 6, die über einen ersten Eingang, wie durch die Pfeile angedeutet, mit einer Schnittstelle 2 für eine Chipkarte 1 in Verbindung steht. Die Pfeile verdeutlichen, in welcher Richtung eine Information von einer Komponente zur anderen fließt. Der Doppelpfeil zwischen der Schreib-/Leseeinheit 2 und der Steuereinrichtung 6 zeigt dies für den Fall einer Rückzahlung auf die Chip-Karte 1 an. Des Weiteren ist eine Auswahlvorrichtung 3, vorzugsweise eine Tastatur, ein Zeitgenerator 4 sowie eine Stromversorgung 5, insbesondere eine Batterie, vorgesehen. Die Ausgabe von Signalen oder Mitteilungen durch die zentrale Steuereinrichtung 6 erfolgt über ein optisches Anzeigemittel 7, z. B. ein stromsparendes LCD-Display, und akustischen Anzeigemitteln 8 und 9, z. B. ein Stimmengenerator, der abgespeicherte Sprachmitteilungen ausgibt, oder ein Summer. Über das optische Anzeigemittel 7 wird insbesondere eine noch nicht verbrauchte Parkgebühr bei der Rückzahlung angezeigt.

Zum Bezahlen einer gewünschten Parkzeit wird die Chipkarte 1 in die Schreib-/Leseeinheit 2 eingeführt und von dieser geprüft. Anschließend wird von der zentralen Steuereinrichtung 6 ein Geldbetrag, der der gewünschten Parkzeit entspricht, im Voraus beispielsweise für zwei Stunden abgebucht. Die gewünschte Parkzeit kann über die Auswahlvorrichtung 3 vom Nutzer des Parkplatzautomaten 100 ausgewählt werden. Die Steuereinrichtung 6 richtet dann in einem ihr zugeordneten Speicher ein individuelles Konto ein, auf dem unter der Identifizierungsnummer der Chipkarte 1 bzw. der vom Nutzer eingegebenen PIN-Nummer, die von der Schreib-/Leseeinheit 2 ermittelt wurde, der abgebuchte Betrag gespeichert wird. Des Weiteren werden von der Steuereinrichtung 6 über optische und/oder akustische Anzeigemittel 7, 8, 9 entsprechende Informationen, insbesondere die bezahlte Parkzeit bzw. das Ende dieser Parkzeit, ausgegeben. Zur zeitlichen Steuerung und Überwachung des Ablaufs einer bezahlten Parkzeit dient ein Zeitgenerator 4, z. B. eine im Parkplatzautomaten 100 integrierte Quarzuhr.

Es ist auch möglich, dass über die Auswahlvorrichtung 3, z. B. eine Tastatur, eine PIN-Nummer, mit der die Chipkarte 1 verschlüsselt ist, in den Parkplatzautomat 100 eingegeben wird, um eine unberechtigte Nutzung einer Chip-Karte 1 zu unterbinden bzw. den mit dieser Chip-Karte 1 bezahlten Parkplatz genau zu identifizieren.

Vorzugsweise wird von dem Parkplatzautomaten 100 kein Parkschein ausgedruckt, der z. B. hinter der Windschutzscheibe eines Kraftfahrzeugs abgelegt wird, sonder die verbleibende Restparkzeit wird direkt über ein beliebiges Anzeigemittel 7, 8, 9 am Parkplatzautomaten 100 angezeigt.

Es versteht sich, dass die pro Zeiteinheit fälligen Gebühren zur Miete eines Parkplatzes linear oder progressiv bzw. regressiv gestaffelt sein können in Abhängigkeit vom Standort und der wirtschaftlichen Attraktivität des Parkplatzes. Diese Gebühren, die jeweils pro Zeiteinheit fällig sind, können vom Betreiber des Parkplatzautomaten 100 auch individuell eingegeben bzw. verändert werden.

Wird der Parkvorgang vor Erreichen der bereits bezahlten maximalen Parkzeit beendet wird die Chip-Karte 1 vom Nutzer erneut in die Schreib/Leseeinheit 2 eingeführt und gegebenenfalls wieder eine Identifizierung der Chip-Karte 1 z. B. über die Auswahlvorrichtung 3 vorgenommen. Anschließend wird von der Steuereinrichtung 6 überprüft, ob noch ein Restbetrag, der einer noch nicht abgelaufenen Parkdauer entspricht, in dem vorstehend beschriebenen Konto bzw. Guthaben vorhanden ist. Falls dies der Fall ist wird von der Steuereinrichtung 6 die Schreib-/Leseeinheit 2 derart angesteuert, dass dieser Betrag auf die Chip-Karte 1 zurückerstattet wird. Somit wird nur die tatsächlich benötigte Parkzeit bezahlt. Dabei werden über das optische Anzeigemittel 7 entsprechende Mitteilungen ausgeben. Zusätzlich kann eine akustische Ausgabe der zurückzuerstattenden Gebühr mit den akustischen Anzeigemitteln 8, 9 erfolgen.

Das elektronische System des Parkautomaten zur Erhebung von Gebühren für das Parken von Kraftfahrzeugen besteht aus einer zentralen Steuereinrichtung 6 mit einer Schnittstelle 2 z. B. in Form einer Schreib/Leseeinheit für eine Chipkarte, einer Auswahlvorrichtung 3 z. B. in Form einer Tastatur, einem Zeitgenerator 4 und einer Stromversorgung 5. Darüber hinaus ist ein optisches Anzeigemittel 7 sowie eine Sprachausgabevorrichtung 8 und eine Signaltonausgabevorrichtung 9 vorgesehen. Die Zahlkarte 1, z. B. eine Chipkarte, verfügt über einen Eingang für die Schnittstelle 2 sowie über einen entsprechenden Ausgang.

Der Zeittakt, mit dem die im Konto gespeicherte und von der Zahlkarte abgebuchte Gebühr verringert wird kann vom Betreiber des Parkautomaten beliebig eingestellt werden. Vorzugsweise wird über die Auswahlvorrichtung 3 ein Parkplatz, auf dem ein Kraftfahrzeug abgestellt ist, ausgewählt und an die Steuereinrichtung 6 übermittelt. Diese prüft zudem, ob auf der Zahlkarte ein ausreichendes Guthaben vorhanden ist und bucht einen Pauschalbetrag von der Zahlkarte ab. Entsprechende Mitteilungen können über das optische Anzeigemittel 7 sowie die akustischen Anzeigemittel 8, 9 dem Nutzer mitgeteilt werden. Die Höhe einer Vorauszahlung kann vom Nutzer auch über die Auswahlvorrichtung 3 erhöht werden. Um den Parkvorgang zu beenden wird die Zahlkarte erneut in den Parkautomaten eingeführt, um eine Verbindung mit der Schnittstelle 2 herzustellen, wobei die Zahlkarte auf ihren Identifizierungscode hin überprüft wird. Dies kann ebenfalls dem Nutzer optisch und/oder akustisch mitgeteilt werden. Stimmt der Identifizierungscode der Zahlkarte mit einem in dem Speicher der Steuereinrichtung 6 eingerichteten Konto überein wird das Konto daraufhin überprüft, ob noch ein Guthaben vorhanden ist. Dieses Guthaben, das ebenfalls optisch und/oder akustisch angezeigt wird, wird dann entsprechend wieder über die Schnittstelle 2 auf die Zahlkarte zurück übertragen, so dass eine Rückerstattung von nicht ausgenutzten Parkgebühren erfolgt. Somit wird eine genaue Abrechnung der tatsächlich benötigten Parkzeit erreicht. Jede Zahlkarte ist hierfür mit einem Identifizierungscode versehen, der eine Individualisierung ermöglicht. Dieser Code kann entweder in einem eigenen Codierungssystem für den Parkautomaten bestehen oder z. Bsp. über eine Pin-Nummer nach Art einer EC-Karte ausgeführt sein.

### Bezugszeichenliste

- 1.: Chip-Karte
- 2.: Schreib-/Leseeinheit für Chip-Karte
- 3.: Auswahlvorrichtung
- 4.: Zeitgenerator
- 5.: Stromversorgung
- 6.: Zentrale Steuereinrichtung
- 7.: Optisches Anzeigemittel
- 8.: Akustisches Anzeigemittel
- 9.: Akustisches Anzeigemittel
- 100: Parkplatzautomat

## Patentansprüche

1. Parkplatzautomat (100) mit einer Eingabevorrichtung für Zahlungsmittel und einer Anzeigevorrichtung (7, 8, 9) zur Anzeige einer bezahlten Parkzeit und mit einer zentralen Steuereinrichtung (6),
**dadurch gekennzeichnet,**
**dass** eine Rückgabevorrichtung zur Rückzahlung eines der nicht verbrauchten Parkzeit entsprechenden Geldbetrags und eine optische Anzeigevorrichtung (7) zur Anzeige eines nicht verbrauchten Geldbetrags vorgesehen ist.

2. Parkplatzautomat nach Anspruch 1,
**dadurch gekennzeichnet,**
**dass** die Eingabevorrichtung und die Rückgabevorrichtung eine Schreib-/Leseeinheit (2) für eine Chip-Karte (1) ist.

3. Parkplatzautomat nach Anspruch 2,
**dadurch gekennzeichnet,**
**dass** der Chip-Karte (1) ein Code zuordenbar ist.

4. Parkplatzautomat nach einem der Ansprüche 1 bis 3,
**dadurch gekennzeichnet,**
**dass** eine Auswahlvorrichtung (3) zur Auswahl einer zu bezahlenden Parkzeit und/oder eines Parkplatzes vorgesehen ist, insbesondere eine Tastatur.

5. Parkplatzautomat nach einem der Ansprüche 1 bis 4,
**dadurch gekennzeichnet,**
**dass** er mit einer Batterie versehen ist.

6. Verfahren zur Bewirtschaftung eines Parkplatzes, insbesondere mit einem Parkplatzautomat (100) nach einem der Ansprüche 1 bis 5, wobei an einem Parkplatzautomat (100) über eine Eingabevorrichtung eine Parkzeit im voraus bezahlt wird,
**dadurch gekennzeichnet,**
**dass** bei einer Beendigung des Parkens vor Ablauf der bereits bezahlten Parkzeit von einer Rückgabevorrichtung der entsprechende Geldbetrag rückerstattet und über eine optische Anzeigevorrichtung (7) wiedergegeben wird.

7. Verfahren nach Anspruch 6,
**dadurch gekennzeichnet,**
**dass** das Bezahlen und das Zurückerstatten mit einer Chip-Karte (1) erfolgt.

8. Verfahren nach Anspruch 7,
**dadurch gekennzeichnet,**
**dass** eine Codierung der Chip-Karte (1) erfolgt.

9. Verfahren nach einem der Ansprüche 6 bis 8,
**dadurch gekennzeichnet,**
**dass** eine Parkzeit und/oder ein Parkplatz ausgewählt wird.

10. Verfahren nach einem der Ansprüche 6 bis 9,
**dadurch gekennzeichnet,**
**dass** der Parkplatzautomat mit einer Batterie betrieben wird.
